(19) Europäisches Patentamt
European Patent Office
Office européen des brevets

(11) Veröffentlichungsnummer : **0 073 008**
**B1**

# (12) EUROPÄISCHE PATENTSCHRIFT

(45) Veröffentlichungstag der Patentschrift : **07.11.84**

(51) Int. Cl.³ : **C 09 B 69/00**, C 09 B 25/00, C 09 B 11/28, C 09 B 11/04, C 09 B 43/11, D 21 H 3/80

(21) Anmeldenummer : **82107503.3**

(22) Anmeldetag : **18.08.82**

## (54) Kationische Farbstoffe.

(30) Priorität : **24.08.81 DE 3133391**

(43) Veröffentlichungstag der Anmeldung : **02.03.83 Patentblatt 83/09**

(45) Bekanntmachung des Hinweises auf die Patenterteilung : **07.11.84 Patentblatt 84/45**

(84) Benannte Vertragsstaaten : **CH DE FR GB IT LI**

(56) Entgegenhaltungen :
**DE-A- 2 046 785**
**DE-A- 3 006 013**
**FR-A- 1 323 153**
**FR-A- 1 567 970**

(73) Patentinhaber : **BASF Aktiengesellschaft**
**Carl-Bosch-Strasse 38**
**D-6700 Ludwigshafen (DE)**

(72) Erfinder : **Patsch, Manfred, Dr.**
**Fritz-Wendel-Strasse 4**
**D-6706 Wachenheim (DE)**
Erfinder : **Ruske, Manfred**
**Merziger Strasse 10**
**D-6700 Ludwigshafen (DE)**

**EP 0 073 008 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft kationische Farbstoffe, die Bismethylenimidazolgruppen enthalten und deren Verwendung.

Es wurden bereits kationische Farbstoffe vorgeschlagen, die Methylenimidazolgruppen enthalten (Patentanmeldung STET DE-A-3 006 013 und DE-A-3 044 563) und die durch Umsetzen von neutralen Farbstoffen mit Imidazolen und Formaldehyd erhalten werden. Diese Farbstoffe färben Papier in der Masse mit guten Ausblutechtheiten bei gleichzeitig guten Abwasserwerten an.

Aufgabe der vorliegenden Erfindung war es, kationische Farbstoffe zu entwickeln, die den in den Patentanmeldungen STET DE-A-3 006 013 und DE-A-3 044 563 beschriebenen kationischen Farbstoffe auf Papier in der Ausblutechtheit und beim Färben von Papier in der Masse überlegen sind.

Gegenstand der vorliegenden Erfindung sind kationische Farbstoffe der allgemeinen Formel

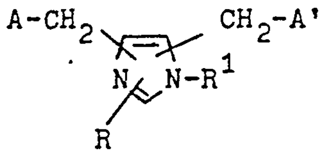
(I)

in der

A und A' für einen einwertigen Rest eines Farbstoffs aus der Reihe der Azo- oder Chinophthalonfarbstoffe, wobei A und A' gleich oder verschieden sein können, oder

A und A' unabhängig voneinander für einen der Reste der Formeln

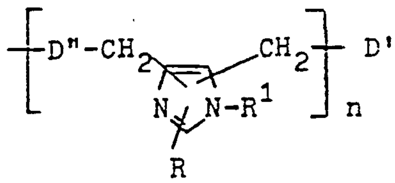

und

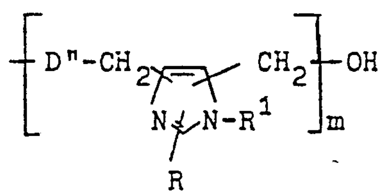

R für $C_1$- bis $C_6$-Alkyl, Benzyl oder Aryl,

$R^1$ für Wasserstoff, $C_1$- bis $C_4$-Alkyl oder Aryl,

D' für einen einwertigen und

D'' für einen zweiwertigen Rest eines Farbstoffs aus der Reihe der Triphenylmethan- oder Xanthenfarbstoffe,

n für eine ganze Zahl $\geq 1$ und

m für eine ganze Zahl $\geq 1$

stehen, wobei die Summe (n + m) im Mittel $\leq 10$ ist.

Die Substituenten $D'—CH_2—$, $—D''—CH_2—$ und R- sind an C-Atome des Imidazolrings gebunden. Außerdem sind die $—CH_2$-Gruppen der Reste $D'—CH_2—$ und $—CH_2—D''—$ an ein C-Atom der aromatischen Ringe von D'— und —D''— gebunden.

Bevorzugt sind Farbstoffe I, in denen A und A' für Reste eines Chinophthalons oder D' und D'' für den Rest eines Triphenylmethan- oder eines Xanthenfarbstoffs stehen, wobei die Summe (m + n) im Mittel $\leq 10$, vorzugsweise $\leq 8$ ist.

Die Farbstoffe I besitzen im Vergleich zu den bekannten Farbstoffen überlegene Ausblutechtheiten und geben beim Färben von Papier in der Masse ein farbloses Abwasser. Die Farbstoffe I sind in verdünnten Säuren, wie 5- bis 30 gew.-%iger Essigsäure, Propionsäure, Methoxyessigsäure oder Methansulfonsäure leicht bis gut löslich.

Die Farbstoffe I werden durch Kondensation der entsprechenden Farbstoffe D'H (= $D''H_2$) (IV) mit bifunktionellen Imidazolen, vorzugsweise Bishydroxymethylimidazolen V in Gegenwart saurer Mittel erhalten :

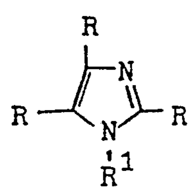
(V)

In der Formel V stehen $R^1$ für Wasserstoff, $C_1$- bis $C_4$-Alkyl oder Aryl, 2 R für $—CH_2—OH$ und das restliche R für $C_1$- bis $C_6$-Alkyl, Aryl wie Phenyl oder für Benzyl.

Bevorzugte Imidazole V leiten sich vom 2-$C_1$- bis $C_6$-Alkylimidazol wie 2-Methyl-, 2-Ethylimidazol und vom 2-Arylimidazol wie 2-Phenylimidazol ab.

Das Verhältnis von IV zu V liegt in der Regel zwischen 1 : 0,8 bis 1 : 2,0, vorzugsweise zwischen 1 : 1 und 1 : 1,2 Mol.

Die Umsetzung erfolgt im allgemeinen bei Temperaturen von 0 bis 50, vorzugsweise von 5 bis 20 °C. Die Reaktionsdauer liegt in der Regel zwischen 2 und 20 Stunden, wobei die Reaktionsdauer so bemessen wird, daß der entstandene Farbstoff I in verdünnten Säuren noch gut löslich ist. Die Reaktionsdauer ist vor allem vom Farbstoff IV abhängig. So erhält man z. B. einen gut löslichen Farbstoff, wenn man C.I. Solvent Dye, C.I. Nr. 45 195 6 Stunden bei 20 bis 25 °C in 96 gew.-%iger Schwefelsäure mit dem Imidazol V rührt.

Verwendet man als IV Farbstoffe, die mehr als einen zur Reaktion mit den Hydroxymethylgruppen im V befähigte Reste (Ringe) enthalten, z. B. den Xanthenfarbstoff C.I. Nr. 45 195, dann erhält man bei der Umsetzung mit der bifunktionellen Imidazolverbindung V Produkte I, die mehr als 2 Farbstoffreste enthalten, d. h. n und/oder $m > 0$. In diesem Fall werden bei zu langer Reaktion polymere Farbstoffe erhalten, die in verdünnter Säure nicht mehr oder nur noch wenig löslich sind. In der Regel sind Farbstoffe mit $(n + m) \leq 10$, insbesondere solche mit $(m + n) \leq 8$ noch gut löslich. Besonders leicht löslich sind Farbstoffe mit $(m + n) \leq 6$.

Als Endgruppen kommen für die polymeren Farbstoffe der Formel I synthesebedingt die Reste —OH oder —D' in Betracht.

Die optimalen Bedingungen für die Umsetzung eines bestimmten Farbstoffs können durch einfache Reihenversuche leicht ermittelt werden.

Als saure Mittel, die gleichzeitig auch als Reaktionsmedium dienen können, kommen für das Verfahren z. B. 80 bis 100 gew.-%ige Schwefelsäure oder Phosphorsäure, gegebenenfalls zusammen mit wasserabspaltenden Mitteln wie Schwefeltrioxid (Oleum), Phosphorpentoxid, Meta- oder Polyphosphorsäure, Essigsäureanhydrid, Benzol- oder Toluolsulfonsäure in Betracht. Als saures Mittel, das gleichzeitig auch als Reaktionsmedium dient, ist 96 bis 100 gew.-%ige Schwefelsäure, bis zu 12 gew.-%iges Oleum oder eine Mischung aus 85 %iger Phosphorsäure und Phosphorpentoxid bevorzugt.

Das Reaktionsgemisch wird auf Wasser oder Eis/Wasser ausgetragen und durch Zugeben von basischen Mitteln, z. B. Natron-, Kalilauge oder Ammoniak der Farbstoff in Form der freien Base gefällt, durch Filtrieren abgetrennt und getrocknet oder in Form des wasserfeuchten Preßkuchens weiterverarbeitet.

Besonders bevorzugt sind Farbstoffe der Formel

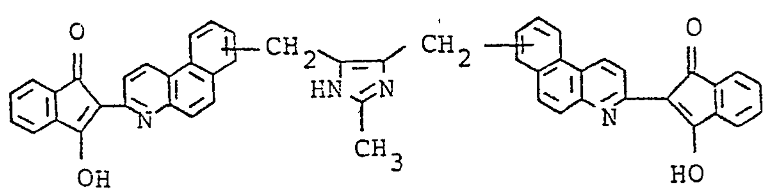

(IV)

und

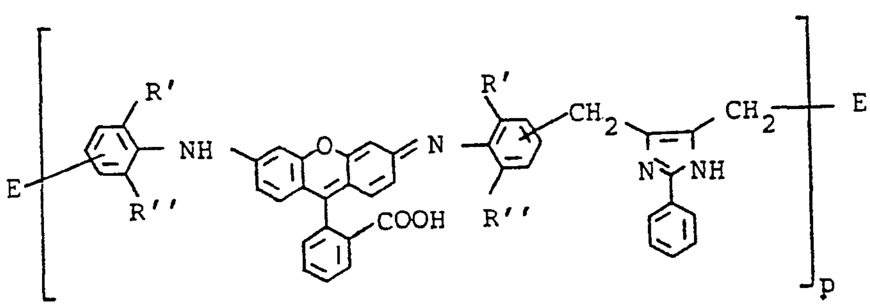

(V)

mit R', R'' = $C_1$- bis $C_3$-Alkyl, p im Mittel 3 bis 6, E' = —OH und E = —H oder 2-Phenyl-4-hydroxymethyl-4-methylenimidazol.

Die Erfindung soll durch die folgenden Ausführungsbeispiele zusätzlich erläutert werden. Die im folgenden angegebenen Teile und Prozentangaben beziehen sich auf das Gewicht.

## Beispiel 1

Zu 270 Teilen 96 %iger Schwefelsäure gibt man innerhalb 3 Stunden bei 0 bis 5 °C nacheinander 31 Teile C.I. Solvent Dye Nr. 45 195 und 15,2 Teile 2-Phenyl-4,5-dihydroxymethylimidazol. Das Reaktionsgemisch wird danach 4 Stunden bei 20 bis 25 °C gerührt (im Dünnschichtchromatogramm ist kein

Ausgangsprodukt mehr zu sehen) und dann auf 1 000 Teile Eiswasser ausgetragen. Nach dem Neutralisieren mit Ammoniak, wird abgesaugt und getrocknet (60 °C im Vakuum).

Ausbeute : 47 Teile Farbstoff, der wahrscheinlich der Formel

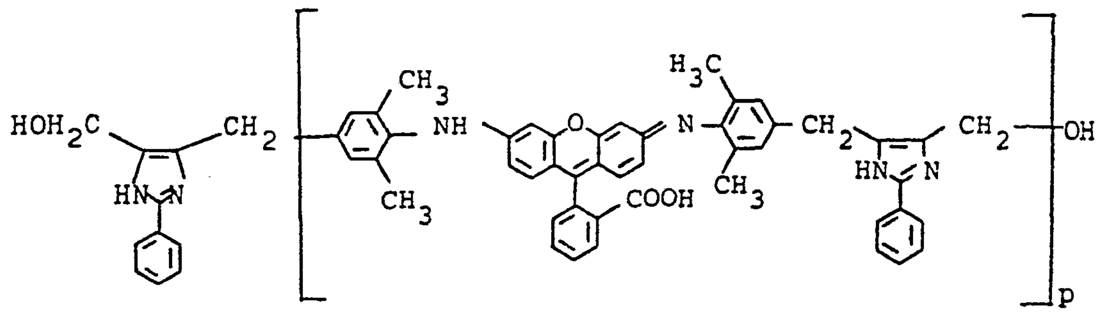

entspricht. Das Verhältnis Farbstoff zu Imidazol beträgt 5 : 6 Mol.

Analyse N ber. : 8,28 %

N gef. : 8,2 %

$\bar{p} \approx 5$

Der Farbstoff ist in organischen Lösungsmitteln wie Methanol, Ethanol oder Chlorbenzol nicht löslich. Er löst sich gut in verdünnten Säuren, wie Essigsäure, Propionsäure, Methoxyessigsäure oder Methansulfonsäure. $\lambda_{max}$ 522 nm (verdünnter Essigsäure).

Beispiel 2

Man verfährt wie in Beispiel 1, verwendet jedoch anstelle von C.I. Solvent Dye Nr. 45 195 den Farbstoff der Formel

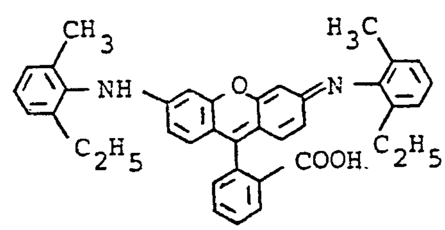

Ausbeute : 48 Teile Farbstoff, der wahrscheinlich der Formel

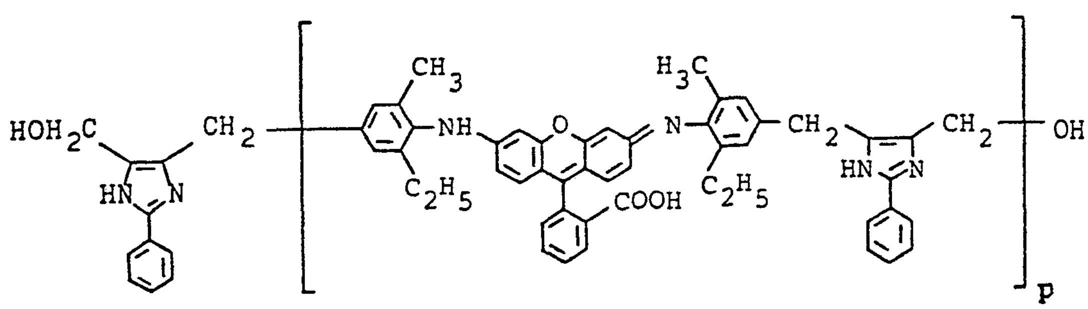

entspricht. Das Verhältnis Farbstoff zu Imidazol beträgt 5 : 6 Mol. $\bar{p} \approx 5$

Analyse N ber. : 7,98 %

N gef. : 8,0 %

$\lambda_{max}$ (in 10 %iger Essigsäure) : 524 nm.

Beispiel 3

Innerhalb von 3 Stunden trägt man bei 0 bis 5 °C in 150 Teile konz. Schwefelsäure nacheinander 10,2 Teile (= 0,05 Mol) 2-Phenyl-4,5-dihydroxymethylimidazol und 28,3 Teile (= 0,05 Mol) des Farbstoffs der Formel

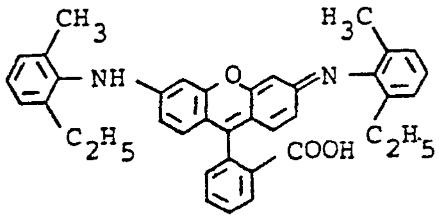

ein und läßt auf Raumtemperatur erwärmen und rührt weitere 3 Stunden bei 20 bis 25 °C. Das Reaktionsgemisch wird auf 2 000 Teile Eis ausgetragen, mit 450 Teilen 50 %iger Natronlauge neutralisiert und der ausgefällte Farbstoff abgesaugt, gewaschen und bei 70 °C im Vakuum getrocknet.

Ausbeute : 31 Teile Farbstoff, dem wahrscheinlich die Formel

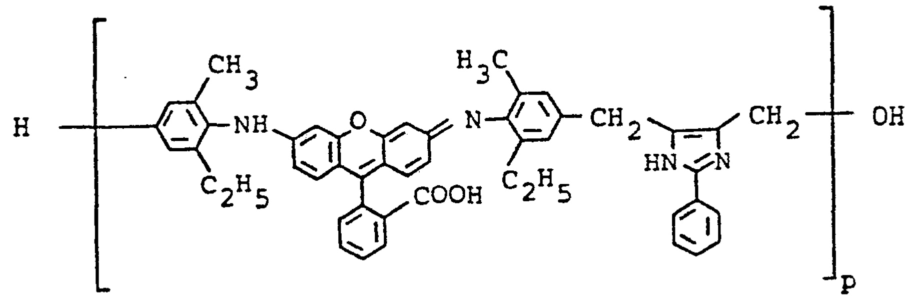

zukommt. Das Verhältnis Ausgangsfarbstoff zu Imidazol beträgt 5 : 5 Mol. $\bar{p} \approx 5$

$\lambda_{max}$ 524 nm (in 10 %iger Essigsäure).

Beispiel 4

25,8 Teile Solventblue 23, C.I. Nr. 42 760 und 15,3 Teile 2-Phenyl-4,5-dihydroxymethylimidazol werden nacheinander bei 0 bis 5 °C in 270 Teile konz. Schwefelsäure eingetragen. Man läßt auf 20 bis 25 °C erwärmen und rührt bei dieser Temperatur 10 Stunden. Das Reaktionsgemisch wird auf 1 000 Teile Eiswasser ausgetragen und das Gemisch mit Ammoniak neutralisiert. Der Farbstoff wird abgesaugt und bei 60 °C im Vakuum getrocknet.

Ausbeute : 38 Teile Farbstoff, der wahrscheinlichen Formel

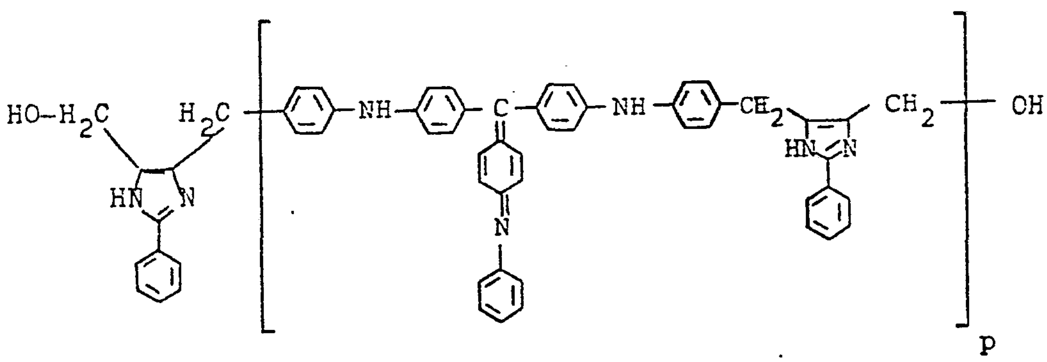

Das Verhältnis Ausgangsfarbstoff zu Imidazol beträgt 3 : 4 Mol. $\bar{p} \approx 3$

Analyse N ber. : 10,56 %

N gef. : 11,2 %

$\lambda_{max}$ (in 90 %iger Essigsäure) : 593 nm.

Beispiel 5

Man arbeitet wie in Beispiel 1, verwendet jedoch anstelle von 2-Phenyl-4,5-dihydroxymethylimidazol 9 Teile 2-Methyl-4,5-dihydroxymethylimidazol.

Ausbeute : 33 Teile Farbstoff, der wahrscheinlichen Formel

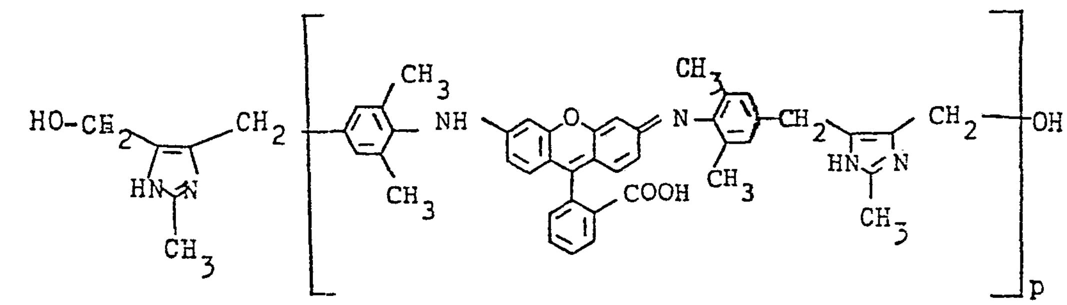

Das Verhältnis Ausgangsfarbstoff zu Imidazol beträgt 5 : 6 Mol. $\bar{p} \approx 5$.
Analyse N ber. : 9,19 %
N gef. : 8,9 %
$\lambda_{max}$ : 524 nm (in 40 %iger Essigsäure).

Beispiel 6

16,1 Teile 5,6-Benzochinophthalon und 15,2 Teile 2-Phenyl-3,4-dihydroxymethylimidazol werden bei 0 bis 5 °C nacheinander in 270 Teilen konz. Schwefelsäure eingetragen. Man läßt auf 20 bis 25 °C erwärmen und rührt 10 Stunden bei dieser Temperatur. Nach dem Austragen auf 1 000 Teile Eiswasser wird neutralisiert und die Fällung abgesaugt. Nach dem Trocknen im Vakuum bei 60 °C erhält man 32 Teile des Farbstoffs

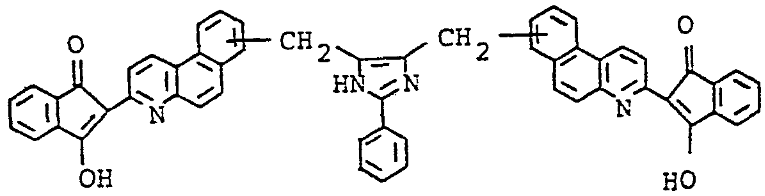

$C_{55}H_{34}N_4O_4$ MG = 814
N ber. : 6,88 %
N gef. : 8,6 %
$\lambda_{max}$ (in 50 %iger Essigsäure) : 422 nm.

Anwendungsbeispiel

Einer Suspension von 50 g gebleichtem Sulfitzellstoff in 21 Wasser werden 2 g einer 10 %igen essigsauren Lösung des Farbstoffs aus Beispiel 1 zugegeben. Das Gemisch wird 15 Minuten bei 20 bis 25 °C leicht gerührt und dann mit Wasser auf 0,2 % Feststoffgehalt verdünnt. Mit dieser Suspension werden auf einem Laborblattbildner Papierblätter hergestellt und die Blätter 5 Minuten bei 100 °C getrocknet. Man erhält rot gefärbte Blätter, das Abwasser der Färbung ist völlig farblos. Die Ausblutechtheiten nach DIN 53 991 gegen die verschiedenen Prüfflüssigkeiten werden mit 5, d. h. kein Ausbluten, beurteilt. Die Färbung ist mit Hypochlorit bleichbar.

Ähnliche Ergebnisse werden erhalten, wenn man die Farbstoffe verwendet, die nach den Beispielen 2, 3, 4, 5 oder 6 erhalten werden.

**Ansprüche**

1. Kationische Farbstoffe der allgemeinen Formel

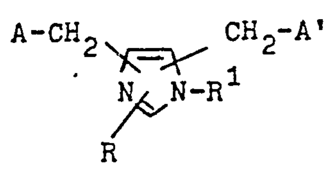

in der

A und A′ für einen einwertigen Rest eines Farbstoffs aus der Reihe der Azo- oder Chinophthalonfarbstoffe, wobei A und A′ gleich oder verschieden sein können, oder

A und A′ unabhängig voneinander für einen der Reste der Formeln

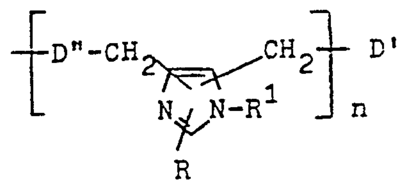

und

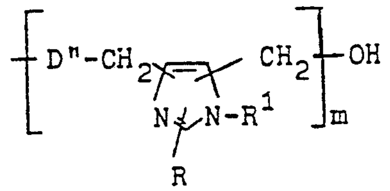

$R_1$ für $C_1$- bis $C_6$-Alkyl, Benzyl oder Aryl,
R für Wasserstoff, $C_1$- bis $C_4$-Alkyl oder Aryl,
D' für einen einwertigen und
D" für einen zweiwertigen Rest eines Farbstoffs aus der Reihe der Triphenylmethan- oder Xanthenfarbstoffe,
n für eine ganze Zahl $\geq 1$ und
m für eine ganze Zahl $\geq 1$
stehen, wobei die Summe (n + m) im Mittel $\leq 10$ ist.

2. Farbstoffe gemäß Anspruch 1, dadurch gekennzeichnet, daß A und A' für einen einwertigen Rest eines Chinophthalonfarbstoffs stehen.

3. Farbstoffe gemäß Anspruch 1, dadurch gekennzeichnet, daß D' für einen einwertigen und D" für einen zweiwertigen Rest eines Triphenylmethan- oder eines Xanthenfarbstoffs, n und m je für eine ganze Zahl $\geq 1$ stehen und die Summe (m + n) im Mittel $\leq 8$ ist.

4. Farbstoff gemäß den Ansprüchen 1, 2 oder 3, dadurch gekennzeichnet, daß $R^1$ für Wasserstoff und R für 2-Phenyl, 2-Methyl oder 2-Ethyl stehen.

5. Farbstoffe gemäß Anspruch 3, dadurch gekennzeichnet, daß $R^1$ für Wasserstoff, R für 2-Phenyl, 2-Methyl oder 2-Ethyl stehen und (n + m) im Mittel 3 bis 6 bedeuten.

6. Farbstoffe gemäß Anspruch 1, gekennzeichnet durch die Formel

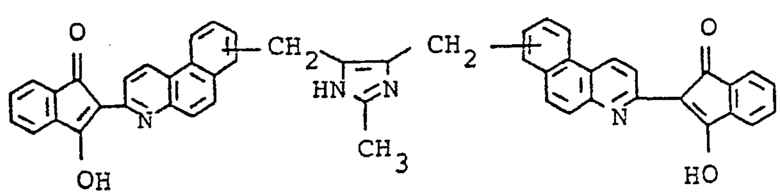

7. Farbstoffe gemäß Anspruch 1, gekennzeichnet durch die Formel

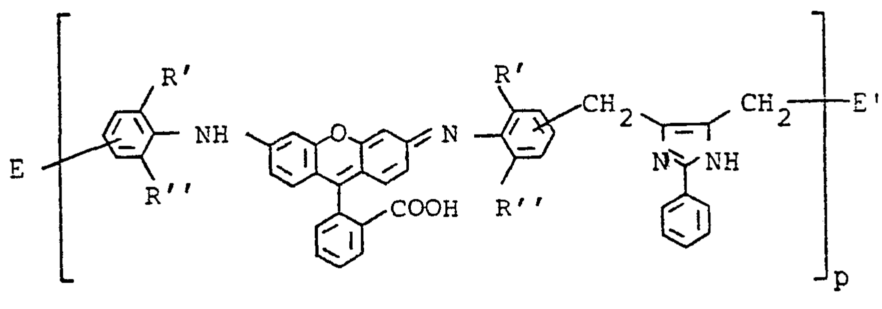

in der R' und R" unabhängig voneinander $C_1$- bis $C_3$-Alkyl, E Wasserstoff oder 2-Phenyl-4-hydroxymethyl-5-methylenimidazol, E' Hydroxy und p im Mittel 3 bis 6 bedeuten.

8. Farbstoff gemäß Anspruch 7, dadurch gekennzeichnet, daß R' für Methyl und R" für Ethyl stehen.

9. Verwendung der Farbstoffe gemäß den Ansprüchen 1 bis 8 zum Färben von Papier.

**Claims**

1. A cationic dye of the general formula

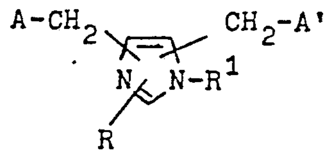

where

A and A′ may be identical or different and are each a monovalent radical of a dye from the series comprising the azo or quinophthalone dyes, or

A and A′ independently of one another are each one of the radicals of the formulae

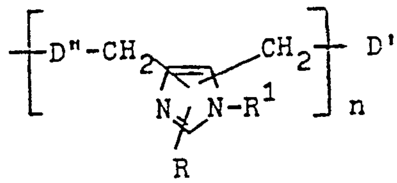

and

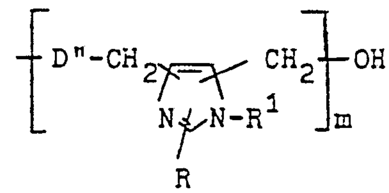

R is $C_1$-$C_6$-alkyl, benzyl or aryl,

$R^1$ is hydrogen, $C_1$-$C_4$-alkyl or aryl,

D′ and D″ are respectively a monovalent and a divalent radical of a dye from the series comprising the triphenylmethane or xanthene dyes,

n is an integer $\geq 1$ and

m is an integer $\geq 1$,

the sum (n + m) being $\leq 10$ on average.

2. A dye as claimed in claim 1, wherein A and A′ are each a monovalent radical of a quinophthalone dye.

3. A dye as claimed in claim 1, wherein D′ and D″ are respectively a monovalent and a divalent radical of a triphenylmethane or xanthene dye, n and m are each an integer of $\geq 1$, and the sum (m + n) is $\leq$ 8 on average.

4. A dye as claimed in claim 1, 2 or 3, wherein $R^1$ is hydrogen and R is 2-phenyl, 2-methyl or 2-ethyl.

5. A dye as claimed in claim 3, wherein $R^1$ is hydrogen, R is 2-phenyl, 2-methyl or 2-ethyl and the sum (n + m) is from 3 to 6 on average.

6. A dye as claimed in claim 1 and having the formula

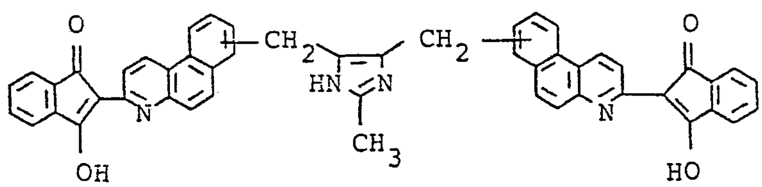

7. A dye as claimed in claim 1 and having the formula

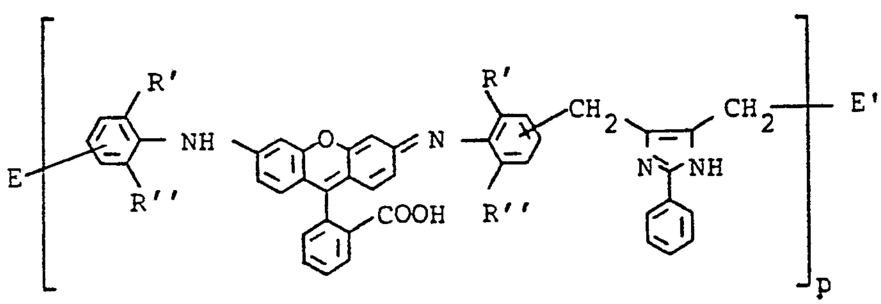

where R′ and R″ independently of one another are $C_1$-$C_3$-alkyl, E is hydrogen or 2-phenyl-4-hydroxymethyl-5-methyleneimidazole, E′ is hydroxyl and p is from 3 to 6 on average.

8. A dye as claimed in claim 7, wherein R′ is methyl and R″ is ethyl.

9. The use of a dye as claimed in claims 1 to 8 for dyeing paper.

**Revendications**

1. Colorants cationiques de formule générale

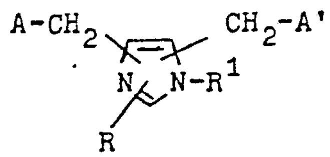

dans laquelle

A et A′ sont mis pour un radical monovalent d'un colorant de la série des colorants azoïques ou quinophtaloniques, A et A′ pouvant être semblables ou différents, ou

A et A′, indépendamment l'un de l'autre, sont mis pour l'un des radicaux de formule

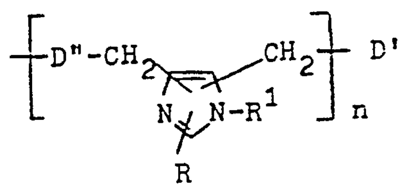

et

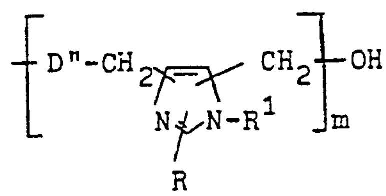

R est mis pour un alcoyle en $C_1$ à $C_6$, un benzyle ou un aryle,

$R^1$ pour un hydrogène, un alcoyle en $C_1$ à $C_4$ ou un aryle,

D′ pour un radical monovalent et

D″ pour un radical bivalent d'un colorant de la série des colorants triphénylméthaniques ou xanthéniques

n pour un nombre entier $\geq 1$ et

m pour un nombre entier $\geq 1$,

la somme (n + m) étant en moyenne $\leq 10$.

2. Colorants selon la revendication 1, caractérisés en ce que A et A′ sont mis pour un radical monovalent d'un colorant quinophtalonique.

3. Colorants selon la revendication 1, caractérisés en ce que D′ est mis pour un radical monovalent et D″ pour un radical bivalent d'un colorant triphénylméthanique ou d'un colorant xanthénique, n et m sont mis chacun pour un nombre entier $\geq 1$ et la somme (m + n) est en moyenne $\leq 8$.

4. Colorant selon l'une quelconque des revendications 1, 2 ou 3, caractérisé en ce que $R^1$ est mis pour un hydrogène et R pour un 2-phényle, un 2-méthyle ou un 2-éthyle.

5. Colorants selon la revendication 3, caractérisés en ce que $R^1$ est mis pour un hydrogène, R pour un 2-phényle, un 2-méthyle ou un 2-éthyle et (n + m) est comprise en moyenne entre 3 et 6.

6. Colorants selon la revendication 1, caractérisés par la formule

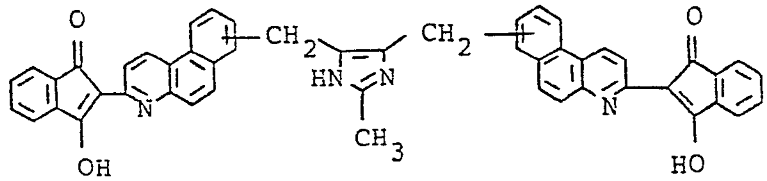

7. Colorants selon la revendication 1, caractérisés par la formule

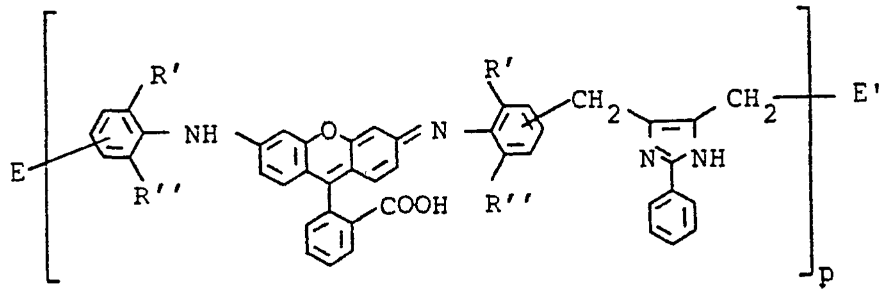

dans laquelle R′ et R″, indépendamment l'un de l'autre, représentent chacun un alcoyle en $C_1$ à $C_3$, E un hydrogène ou un 2-phényl-4-hydroxyméthyl-5-méthylène-imidazole, E′ un hydroxy et p est compris en moyenne entre 3 et 6.

8. Colorant selon la revendication 7, caractérisé en ce que R′ est mis pour un méthyle et R″ pour un éthyle.

9. Utilisation des colorants selon les revendications 1 à 8 pour la coloration de papier.